# EUROPEAN PATENT APPLICATION

(11) **EP 4 733 040 A1**
(43) Date of publication of application: **29.04.2026**
(21) Application number: 25382914.7
(22) Date of filing: 28.08.2025
(51) Int. Cl.: B29C 63/10

(54) **PIPE TAPING MACHINE**

(30) Priority: 28.10.2024 ES 202431977 U
(71) Applicant: Jose Manuel Valero, S.L., 03349 San Isidro (Alicante) (ES)
(72) Inventor: VALERO SALINAS, Jose Manuel, 03001 Alicante (ES)
(74) Representative: Álvarez López, Sonia

(57) **Abstract**

Pipe taping machine, comprising a base frame (1) on which the remaining elements of the machine are arranged; a supporting structure emerging from the base, comprising two uprights (2) disposed at each end of the base and a crossbeam (3) arranged longitudinally over the base between both uprights; a pair of drive rollers (4) arranged on the base on a horizontal plane, longitudinally along the base and in parallel, providing a double linear support for a tubular body to be taped; a plurality of pipe hold-down supports (8) fixed along the crossbeam (3), each support comprising a set of idler rollers (9) arranged in parallel securing the position of the pipe to be taped; a longitudinal rail (11) arranged on the base along one side of the pair of drive rollers (4); and an electrical cabinet (19).

## Description

### Object of the Invention

The present invention relates to a new type of pipe taping machine conceived to externally cover round pipes with a fiberglass sheet and a sealing tape.

The present invention falls within the industrial field related to the manufacture and surface protection of tubular objects by means of winding devices that move axially along a machine.

### Background of the Invention

Within this industrial sector, various machines are known that allow the automatic taping or external protection of a pipe.

In this respect, machines are known for producing disposable formworks for columns, such as that disclosed in document ES2152799, in which the formwork is a tubular body composed of a plurality of expanded polystyrene pieces joined together by adhesive, and which defines means for covering its exterior with a fiberglass band arranged on a coil, the fiberglass being helically wound on the aforementioned tubular core and fixed thereto by adhesive. However, the means for displacing the coil along the tubular body are not optimal, since they required a complex mechanism for moving the tubular body and other independent mechanisms for moving the coil, specifically a planetary movement of the coil around the tubular body combined with an axial parallel displacement of one element relative to the other. This slows down the sealing process, requires costly maintenance, and prevents, for example, the simultaneous fixing of a fiberglass sheet together with additional outer sheets.

Machines are also known that improve upon the problems and limitations of machines such as the one previously indicated. For example, document ES2189572 discloses a machine for applying fiberglass reinforcement to tubular bodies, specifically disposable formworks for columns, which allows the operation of helically coupling a fiberglass mesh onto the rest of the formwork automatically. Based on machines such as that of the previous antecedent, it imparts a rotational movement to the formwork and provides the coil supplying the fiberglass mesh with a longitudinal movement relative to said formwork, which simplifies the winding process and therefore improves upon prior techniques. However, this type of machine presents a series of problems and limitations, such as being very large machines with fixed and immovable elements, wherein, for example, there is an external cabinet from which the user operates the machine but which does not accompany the coil during the winding process, making it impossible to detect any defect in real time; there are no peripheral safety elements; there are no means that allow adaptation to different diameters and/or lengths of tubular bodies to be externally protected, so the range of pipes is very limited and machines must be designed with specific mechanisms depending on the size and length of the tubular bodies; in these machines, access is only possible from the rear of the machine, which complicates maintenance work; and they are still limited in that they cannot work with a double sealing tape, meaning that these machines only allow the winding of either a fiberglass mesh or another type of covering, but not both simultaneously.

In view of these aspects, there is a need to develop a new type of machine that overcomes these existing problems and limitations in the state of the art. In this regard, the present invention defines a pipe taping machine conceived to externally cover round pipes with a fiberglass sheet and a sealing tape simultaneously, such tubular bodies being usable as lost formworks for columns or other construction elements. At the same time, it includes means for adapting to tubular bodies of variable diameter and also to different lengths. Additionally, the present invention is configured from a lighter and more versatile structure that, among other features, includes protective means along the entire machine, comprises an integrated control panel that accompanies the coil during the winding operation, and is equipped with automation means that minimise both winding time and costs.

The applicant is not aware of any type of pipe taping machine that is either similar to or as advantageous as that which is described and claimed below.

### Explanation of the Invention

The invention relates to a new type of taping machine which, in its various embodiments, solves the problems and limitations identified in the prior art.

In greater detail, the machine comprises: a frame, which is the self-supporting base of the machine on which the remaining elements are arranged; a supporting structure or gantry emerging from the frame, which comprises two uprights arranged at each end of the frame and a crossbeam arranged longitudinally over the frame between both uprights; a pair of driving rollers arranged on the frame in a horizontal plane and disposed longitudinally along the frame and in parallel so as to provide a double linear support for a tubular body; a motorised system for driving the rollers located at a front end of the frame, comprising a motor that independently supplies a circular movement to the roller, such that both rollers rotate in opposite directions to each other, thereby imparting a rotary movement to the tubular body; wherein in a preferred embodiment of the invention this system comprises a roller pinion on a toothed disc arranged at the end of each roller, a plurality of secondary sprockets for chain transmission, at least one reduction pinion adjacent to a geared motor, and a chain connecting all the sprockets and supplying a regulated circular movement to the rollers; this motorisation being optionally controlled from a control panel; a system for adjusting the position of the driving rollers at the distal end of the frame, comprising a control and a system of belts fixed to the driving rollers, such that by actuating the control the distance between both rollers is adjusted, thereby allowing the machine to be adapted to any tube diameter to be taped; and wherein, in a possible embodiment of the invention, said control is a crank manually actuated by the operator, or alternatively may be an automatic regulation controlled from the control panel; vertical uprights emerging from the frame between the driving rollers and arranged at the front and distal ends of the frame, comprising a stop disc to which each end of the tube to be taped is fixed and thereby secured in position in the machine, and further comprising a height and length adjustment mechanism, including a telescopic vertical shaft allowing the stop disc to be raised or lowered, and a telescopic horizontal crossbeam allowing the stop to be axially displaced in order to adapt to the length of the tube to be taped; this regulation of the position of the stops being controlled from the control panel; a plurality of tube-holding supports fixed along the crossbeam of the gantry, each support comprising a set of idler rollers disposed in parallel, which serve to prevent the tube to be taped from leaving the support of the driving rollers and to ensure that the tube to be taped maintains its rotary movement; and wherein these tube-holding supports comprise, at the ends of the crossbeam, height regulators formed by pneumatic cylinders enabling the raising or lowering of the entire set of tube-holding supports to adapt to the diameter of the tube to be taped; said height regulation of the supports being controlled from the control panel; a longitudinal rail arranged on the frame and disposed on one side of the pair of driving rollers; a spool carriage, comprising a chassis provided with runners at its lower part which engage with the rail and allow the carriage to move along the rail; and comprising a circular support with an expandable head in which the spool or roll of fibreglass and sealing tape is fixed, the outer surface of the spool being in contact with the outer surface of the tube to be wound, and wherein the circular support comprises a winding drive system allowing the spool to rotate, such system being regulated from the control panel; and wherein the combination of spool rotation with the longitudinal movement of the carriage causes the fibreglass sheet and sealing tape to be helically wound around the outer surface of the tube, which in turn undergoes circular movement; a control panel, fixed integrally to the chassis of the spool carriage and moving therewith, such that the operator controls all machine parameters as the spool carriage advances and tapes the tube, the control panel comprising an electronic controller with a computer program for automating the machine components; and comprising an automatic start/stop button associated with a braking system, in case the operator needs to stop and/or restart the machine; the machine may comprise supports laterally protruding from the longitudinal rail at each of its ends, the supports comprising opposed photocells, which act as a safety mechanism in case the operator enters the taping work area and which trigger an alarm on the control panel, acting as a safety barrier; and an electrical cabinet, which may be arranged on the side of the frame opposite the spool carriage, connected to the control panel, and comprising a power supply module and hydraulic means for ensuring the correct operation of the machine.

The machine may comprise additional elements, for example, a cutting blade mounted on the circular head of the spool carriage, such that said blade can adopt an inoperative position during the entire process of applying the fibreglass and the sealing tape, and finally move into the cutting position, thereby concluding the operating cycle of the machine.

The machine according to the present invention is designed to operate automatically and, in particular, by means of the rotation of driving rollers the tube to be taped supported thereon is rotated, said tube being held in position by idler rollers arranged at its upper part, and by means of an automatically advancing longitudinal carriage carrying the spools of fibreglass and sealing tape, the fibreglass and the sealing tape are helically wound onto the outer surface of the tube. Another advantage of the present invention is that it allows the tube to be provided not only with an external fibreglass sheet coating, but also with customisation through the sealing tape, this being an additional external protective element complementing the fibreglass.

The operation of the machine is such that the position of the stop discs of the tube to be taped is adjusted according to its diameter and length; the position of the driving rollers is adjusted according to the diameter of the tube to be taped, the spacing between them being such that the tube does not jump out of position when rotation begins; the position of the tube-holding supports is adjusted so that the idler rollers press on the tube to be taped, securing its position, while allowing its rotary movement; the spool or roll of fibreglass is inserted into the expandable head of the spool carriage, for example by means of a pneumatic air gun, with air being introduced through a valve such that rubber slats are inflated which secure the fibreglass roll in the support; the roll of sealing tape is introduced into the head shaft and fixed in position, for example with a ring and a handle; it is checked that both ends of the fibreglass and the sealing tape are in contact with the tube to be taped; and the machine is started, with any parameter thereof, such as speed or tension, being adjustable from the control panel. In this regard, it should be noted that the operator intervenes manually only when the machine is stopped, the manual intervention consisting in loading the tube to be taped, adjusting the opening of the driving rollers for proper contact with the tube; placing the ends of the fibreglass and sealing tape roll onto the end of the tube to be taped; and accompanying the spool carriage during its advance while monitoring for any jamming or anomaly.

It should be understood that throughout the description and claims, the term *comprises* and its variants are not intended to exclude other technical features or additional elements, such as the dimensions of the parts or the material thereof.

### Brief Description of the Drawings

To complement the description and to assist in a better understanding of the characteristics of the invention, a set of figures and drawings is provided, wherein, in an illustrative and non-limiting manner, the following is represented:

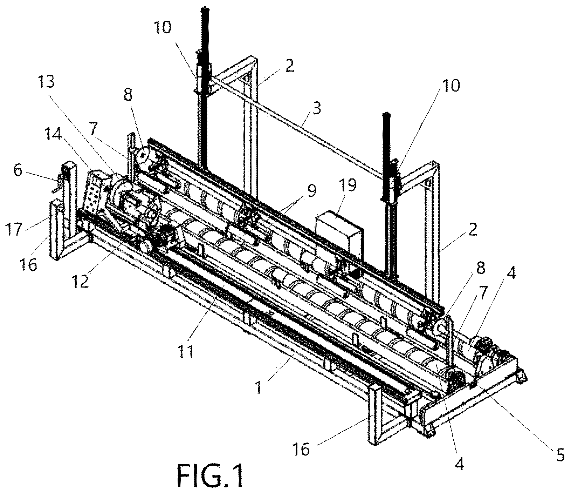

Figure 1: Perspective view of an embodiment of the pipe taping machine according to the present invention.

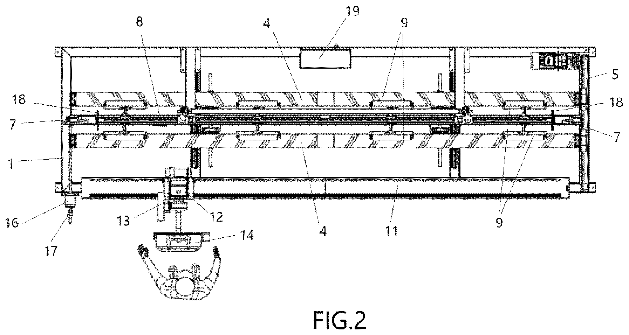

Figure 2: Top view of the pipe taping machine.

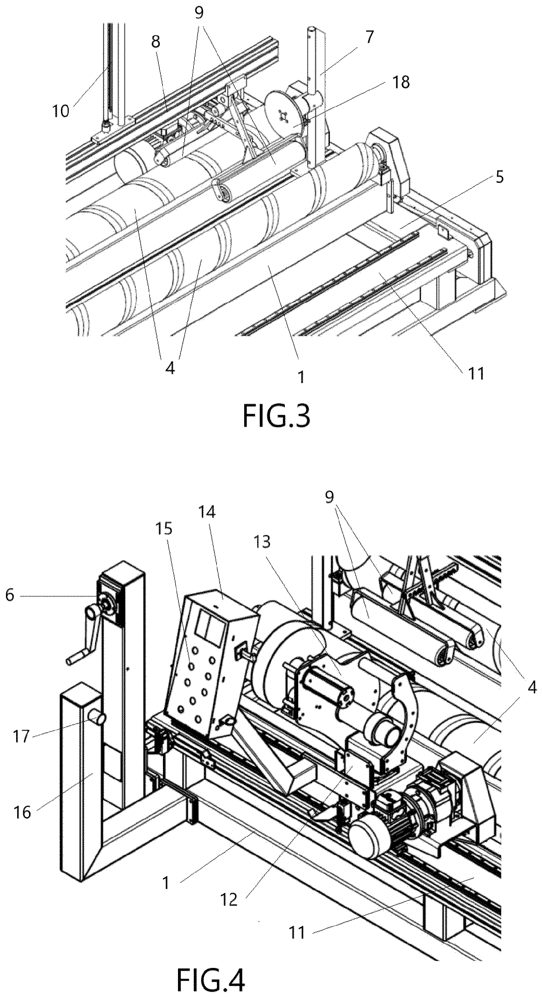

Figure 3: Enlarged detailed view of the front end of the machine.
Figure 4: Enlarged detailed view of the opposite or distal external end of the machine.

### Detailed Description of an Embodiment of the Invention

As can be observed in the set of figures above, one embodiment of the machine of the present invention comprises:
- a base frame (1), which is the self-supporting foundation of the machine on which the remaining elements of the machine are arranged;
- a supporting structure or gantry emerging from the base, comprising two uprights (2) disposed at each end of the base and a crossbeam (3) arranged longitudinally over the base between both uprights;
- a pair of drive rollers (4) arranged on the base on a horizontal plane, longitudinally along the base and in parallel, to provide a double linear support for a tubular body;
- a motorised drive system (5) for the drive rollers arranged at a front end of the base, comprising a motor that independently supplies circular motion to each roller, such that both rollers rotate in opposite directions, thereby imparting a rotary movement to the tubular body;
- a position adjustment system (6) for the drive rollers at the distal end of the base, comprising a control element, in the case of the figures, a manual crank, and a belt system fixed to the drive rollers, such that actuating the control element adjusts the distance between the rollers, thereby allowing the machine to adapt to any pipe diameter;
- vertical uprights (7) emerging from the base between the drive rollers and arranged at the front and distal ends of the base, comprising a stop disc (18) to which each end of the pipe to be taped is secured, thus fixing its position in the machine, and including a height and length adjustment mechanism comprising a telescopic vertical shaft enabling the stop disc to be raised or lowered, and a telescopic horizontal crossbeam enabling axial displacement of the stop to adjust to the length of the pipe to be taped; this stop adjustment being controllable from a control panel;
- a plurality of pipe hold-down supports (8) fixed along the gantry crossbeam, each support comprising a set of idler rollers (9) arranged in parallel, intended to prevent the pipe being taped from disengaging from the drive rollers and ensuring that the pipe maintains its rotary movement, wherein these hold-down supports comprise height regulators at the ends of the crossbeam formed by pneumatic cylinders (10), this height adjustment being controllable from a control panel;
- a longitudinal rail (11) arranged on the base along one side of the pair of drive rollers;
- a coil carriage (12), comprising a frame provided with skids at its lower part in engagement with the rail, enabling the carriage to travel along the rail, and comprising a circular support with an expandable head (13) on which the fiberglass and sealing tape coil or roll is mounted, the outer surface of the coils being in contact with the outer surface of the pipe to be wound, the circular support including a winding drive system enabling rotation of the coil, regulated from a control panel; wherein the combination of rotation of the coil with the longitudinal movement of the carriage causes the fiberglass sheet and sealing tape to be helically wound onto the outer surface of the pipe, which itself has a rotary movement;
- a control panel (14), fixed integrally to the frame of the coil carriage and moving with it, enabling the operator to control all machine parameters as the carriage advances and tapes the pipe, said control panel comprising an electronic controller with software for automation of the machine components; and comprising a plurality of push-buttons (15), including at least one automatic start/stop push-button associated with a braking system in case the operator needs to stop and/or restart the machine;
- supports (16) projecting laterally from the longitudinal rail at each of its ends, said supports comprising opposed photocells (17) acting as a safety mechanism in the event the operator accesses the taping work area, being connected to the control panel to trigger an alarm in the control panel, and functioning as a safety barrier; and
- an electrical cabinet (19), arranged on the side of the base opposite the coil carriage, connected to the control panel, comprising a power supply module and hydraulic means for managing the proper operation of the machine.

## Claims

1. Pipe taping machine comprising: a base frame (1) on which the remaining elements of the machine are arranged; a supporting structure emerging from the base, comprising two uprights (2) disposed at each end of the base and a crossbeam (3) arranged longitudinally over the base between both uprights; a pair of drive rollers (4) arranged on the base on a horizontal plane, longitudinally along the base and in parallel, providing a double linear support for a tubular body to be taped; a plurality of pipe hold-down supports (8) fixed along the crossbeam (3), each support comprising a set of idler rollers (9) arranged in parallel securing the position of the pipe to be taped; a longitudinal rail (11) arranged on the base along one side of the pair of drive rollers (4); and an electrical cabinet (19); **characterised in that** it comprises: a motorised drive system (5) for the drive rollers (4) arranged at a front end of the base, comprising a motor that independently supplies circular motion to each roller, such that both rollers rotate in opposite directions imparting a rotary movement to the tubular body; a position adjustment system (6) for the drive rollers at the distal end of the base, comprising a control element and belts fixed to the drive rollers (4); vertical uprights (7) emerging from the base between the drive rollers (4) and arranged at the front and distal ends of the base, comprising a stop disc (18) to which each end of the pipe to be taped is secured, thereby fixing its position in the machine, and including a height and length adjustment mechanism controlled from a control panel; wherein the pipe hold-down supports (8) comprise height regulators at the ends of the crossbeam formed by pneumatic cylinders (10) controlled from a control panel; a coil carriage (12) movable along the rail (11), comprising a frame with skids at its lower part engaging the rail, and a circular support with an expandable head (13) to which a fiberglass coil and a sealing tape coil are secured, the outer surfaces of the coils being in contact with the outer surface of the pipe to be wound; a control panel (14), fixed integrally to the frame of the coil carriage (12) and moving with it, comprising an electronic controller and a plurality of push-buttons (15).

2. Pipe taping machine according to claim 1, wherein the control element of the position adjustment system (6) is a manual crank.

3. Pipe taping machine according to claim 1, wherein the electronic controller of the control panel (14) comprises software for automation of the machine components.

4. Pipe taping machine according to claim 1, wherein the adjustment mechanism of each stop disc (18) comprises a telescopic vertical shaft for raising or lowering the position of the stop disc, and a telescopic horizontal crossbeam enabling axial displacement of the stop to adjust to the length of the pipe to be taped.

5. Pipe taping machine according to claim 1, wherein the electrical cabinet (19) is arranged on the side of the base opposite the coil carriage and is connected to the control panel (14).

6. Pipe taping machine according to claim 1, wherein the plurality of push-buttons (15) includes at least one automatic start/stop push-button associated with a braking system.

7. Pipe taping machine according to claim 1, further comprising supports (16) projecting laterally from the longitudinal rail (11) at each of its ends, said supports comprising opposed photocells (17) connected to the control panel (14).
